(19) Europäisches Patentamt / European Patent Office / Office européen des brevets

(11) **EP 2 428 045 B1**

(12) **EUROPEAN PATENT SPECIFICATION**

(45) Date of publication and mention
of the grant of the patent:
**11.03.2015 Bulletin 2015/11**

(21) Application number: **10727148.8**

(22) Date of filing: **16.04.2010**

(51) Int Cl.:
*H04N 13/00* (2006.01)          *H04N 19/13* (2014.01)
*H04N 19/14* (2014.01)          *H04N 19/18* (2014.01)
*H04N 19/36* (2014.01)          *H04N 19/597* (2014.01)
*H04N 19/174* (2014.01)         *H04N 19/96* (2014.01)
*H04N 19/124* (2014.01)         *H04N 19/182* (2014.01)
*H04N 19/587* (2014.01)         *H04N 19/46* (2014.01)

(86) International application number:
**PCT/JP2010/057194**

(87) International publication number:
**WO 2010/128628 (11.11.2010 Gazette 2010/45)**

(54) **METHOD FOR RECONSTRUCTING DEPTH IMAGE AND DECODER FOR RECONSTRUCTING DEPTH IMAGE**

VERFAHREN ZUM REKONSTRUIEREN EINES TIEFENBILDES UND DEKODER ZUM REKONSTRUIEREN EINES TIEFENBILDES

PROCÉDÉ DE RECONSTRUCTION D'IMAGE DE PROFONDEUR ET DÉCODEUR POUR RECONSTRUIRE UNE IMAGE DE PROFONDEUR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.05.2009 US 435057**

(43) Date of publication of application:
**14.03.2012 Bulletin 2012/11**

(73) Proprietor: **Mitsubishi Electric Corporation Tokyo 100-8310 (JP)**

(72) Inventors:
 • **YEA, Sehoon**
   **Tokyo 100-8310 (JP)**
 • **VETRO, Anthony**
   **Tokyo 100-8310 (JP)**

(74) Representative: **Pfenning, Meinig & Partner GbR Patent- und Rechtsanwälte Theresienhöhe 11a 80339 München (DE)**

 • SHIN D ET AL: "A region-of-interest (ROI) based wavelet compression scheme for medical images" PROCEEDINGS OF THE INTERNATIONAL SOCIETY FOR OPTICAL ENGINEERING (SPIE), SPIE, USA LNKD- DOI: 10.1117/12.273963, vol. 3031, 23 February 1997 (1997-02-23), pages 790-798, XP008049293 ISSN: 0277-786X
 • LIU Y ET AL: "Embedded image coding based on context classification and quadtree ordering in wavelet packet domain" VISUAL COMMUNICATIONS AND IMAGE PROCESSING; 12-7-2005 - 15-7-2005; BEIJING,, 12 July 2005 (2005-07-12), XP030081017
 • MERKLE P ET AL: "The Effect of Depth Compression on Multiview Rendering Quality" 3DTV CONFERENCE: THE TRUE VISION - CAPTURE, TRANSMISSION AND DISPLAY OF 3D VIDEO, 2008, IEEE, PISCATAWAY, NJ, USA, 28 May 2008 (2008-05-28), pages 245-248, XP031275257 ISBN: 978-1-4244-1760-5 cited in the application

(56) References cited:
**US-A1- 2009 003 720**

• PEI-KUEI TSUNG ET AL: "Multiview video hybrid coding system with texture-depth synthesis" MULTIMEDIA AND EXPO, 2008 IEEE INTERNATIONAL CONFERENCE ON, IEEE, PISCATAWAY, NJ, USA, 23 June 2008 (2008-06-23), pages 1581-1584, XP031313038 ISBN: 978-1-4244-2570-9

• AGARWAL G ET AL: "A fast algorithm to find the region-of-interest in the compressed mpeg domain" PROCEEDINGS OF THE 2003 INTERNATIONAL CONFERENCE ON MULTIMEDIA AND EXPO: 6 - 9 JULY 2003, BALTIMORE MARRIOTT WATERFRONT HOTEL, BALTIMORE, MARYLAND, USA, IEEE OPERATIONS CENTER, US, vol. 2, 6 July 2003 (2003-07-06), pages 133-136, XP010650762 ISBN: 978-0-7803-7965-7

• SEHOON YEA ET AL: 'A wavelet-based two-stage near-lossless coder with L [infinity] -error scalability' VISUAL COMMUNICATIONS AND IMAGE PROCESSING 2006, [Online] 15 January 2006, pages 1 - 10, XP055147861 ISBN: 978-0-81-946117-9 Retrieved from the Internet: <URL:http://proceedings.spiedigitallibrary. org/data/Conferences/SPIEP/2321/607714_1.pd f> [retrieved on 2014-10-21]

## Description

[Technical Field]

This invention relates generally to efficient representations of depth videos, and more particularly, to coding depth videos accurately for the purpose of synthesizing virtual images for novel views.

[Background Art]

SHIN D ET AL: "A region-of-interest (ROI) based wavelet compression scheme for medical images", PROCEEDINGS OF THE INTERNATIONAL SOCIETY FOR OPTICAL ENGINEERING (SPIE), USA, vol. 3031, 23 February 1997 (1997-02-23), pages 790-798 discloses a novel method for selective compression of medical images. In this scheme, regions of interest (ROIs) are differentiated from the background by detecting relevant features such as edged, textures and clusters. A detection map is created for ROIs so that the coding system can use it to assign proper bit rates in the process of quantization.

LIU Y ET AL: "Embedded image coding based on context classification and quadtree ordering in wavelet packet domain" VISUAL COMMUNICATIONS AND IMAGE PROCESSING; 12-7-2005 - 15-7-2005; BEIJING, 12 July 2005 (2005-07-12) presents an embedded wavelet packet image coding algorithm which is based on context classification and quadtree ordering (CCAQQ). To match up well with the quadtree-based embedded coder, a new cost function for the best basis selection is adopted in discrete wavelet packet transform (DWPT). In addition, combined with the structure of the best wavelet packet basis, a complete quadtree representation of wavelet packet coefficients is established to explore the ordering procedure of embedded image coding. Since subband correlation is mainly captured by significance coding, our focus is on significance coding.

MERKLE P ET AL: "The Effect of Depth Compression on Multiview Rendering Quality" 3DTV CONFERENCE: THE TRUE VISION - CAPTURE, TRANSMISSION AND DISPLAY OF 3D VIDEO, 2008, IEEE, PISCATAWAY, NJ, USA, 28 May 2008 (2008-05-28), pages 245-248 presents a comparative study on different techniques for depth-image compression and its implications on the quality of multiview video plus depth virtual view rendering. A novel coding algorithm for depth images that concentrates on their special characteristics, namely smooth regions delineated by sharp edges, is compared to H.264 intra-coding with depth images. These two coding techniques are evaluated in the context of multiview video plus depth representations, where depth information is used to render virtual intermediate camera views of the scene.

PEI-KUEI TSUNG ET AL: "Multiview video hybrid coding system with texture-depth synthesis" MULTIMEDIA AND EXPO, 2008 IEEE INTERNATIONAL CONFERENCE ON, IEEE, PISCATAWAY, NJ, USA, 23 June 2008 (2008-06-23), pages 1581-1584 discloses the following:

A multiview hybrid coding system with texture-depth synthesis is proposed. By sharing the prediction information between texture and depth maps, the depth map can be reconstructed with reduced bitrate overhead. Then, after using matrix-based warping and adaptive disparity compensation, the R-D performance of the proposed system can be about 2 to 4 dB higher than the current MVC coding scheme at low bitrate range.

Three-dimensional (3D) video applications, such as 3D-TV and free-viewpoint TV (FTV) require depth information to generate virtual images. Virtual images can be used for free-view point navigation of a scene, or various other display processing purposes.

One problem in synthesizing virtual images is errors in the depth information. This is a particular problem around edges, and can cause annoying artifacts in the synthesized images, see Merkle et al., "The Effect of Depth Compression on Multiview Rendering Quality," 3DTV Conference: The True Vision - Capture, Transmission and Display of 3D Video, Volume , Issue , 28-30 May 2008 Page(s):245 - 248.

[Summary of Invention]

The present invention is described in the independent claims.

The embodiments of this invention provide a multi-layered coding scheme for depth images and videos. The method guarantees that the maximum error for each reconstructed pixel is not greater than an error limit. The maximum error can vary with each coding layer to enable a successive refinement of pixel values in the image. Within each coding layer, the error limit can also be adapted to account for local image characteristics such as edges that correspond to depth discontinuities.

[Brief Description of the Drawings]

[Fig. 1A]

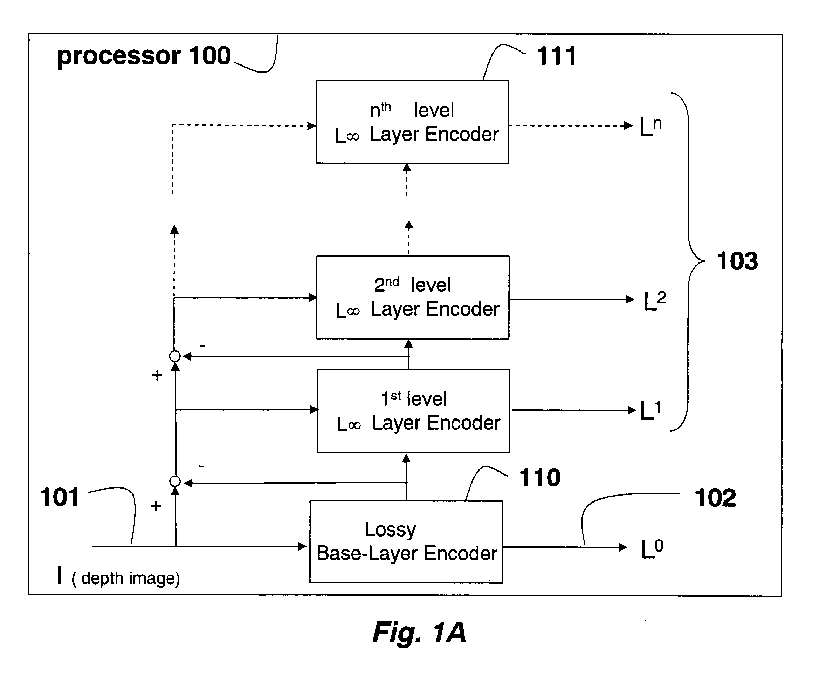

Fig. 1A is a block diagram of a multi-layered encoder and multi-layered decoder according to embodiments of the invention.
[Fig. 1B]

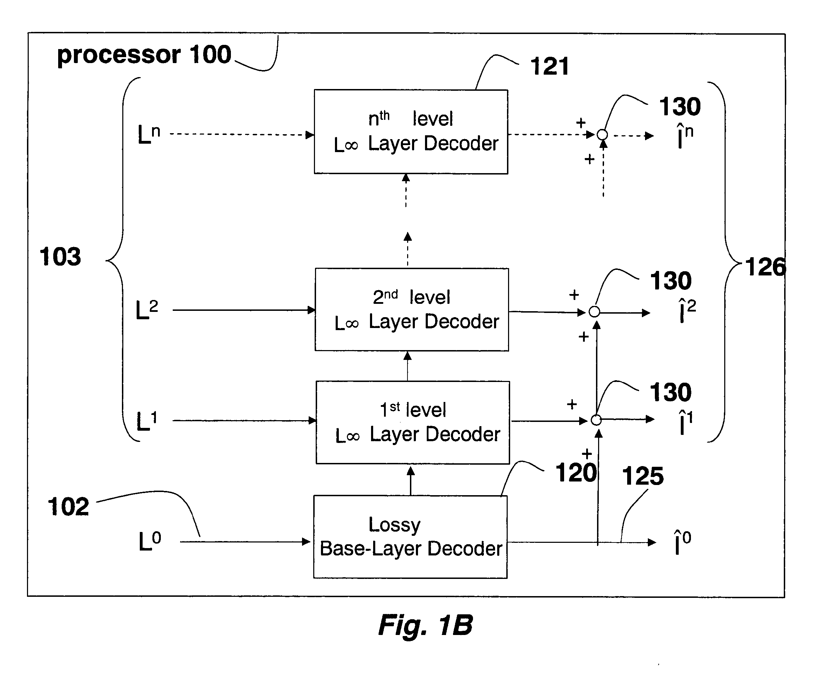

Fig. 1B is a block diagram of a multi-layered encoder and multi-layered decoder according to embodiments of the invention.
[Fig. 2A]

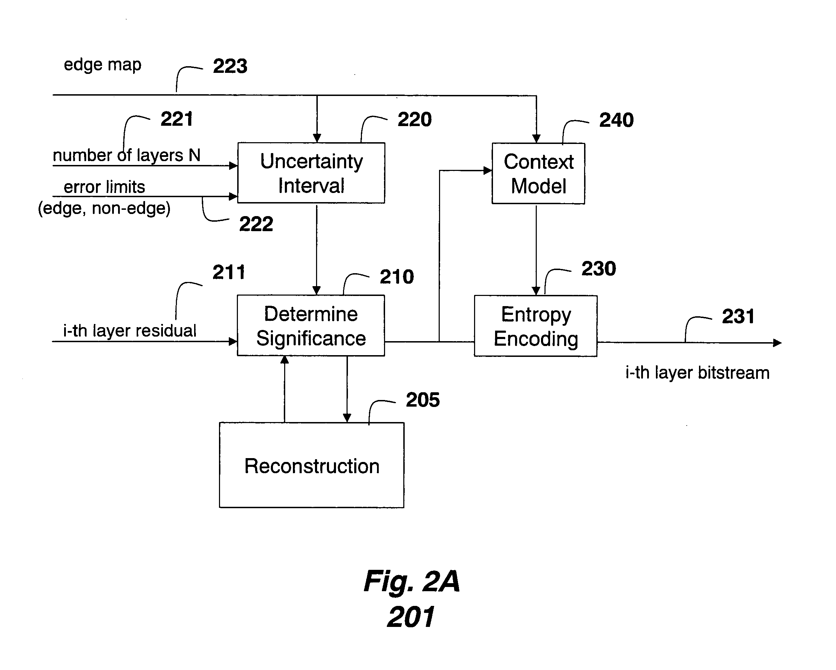

Fig. 2A is a block diagram of an enhancement layer bitstream encoder according to embodiments of the invention.
[Fig. 2B]

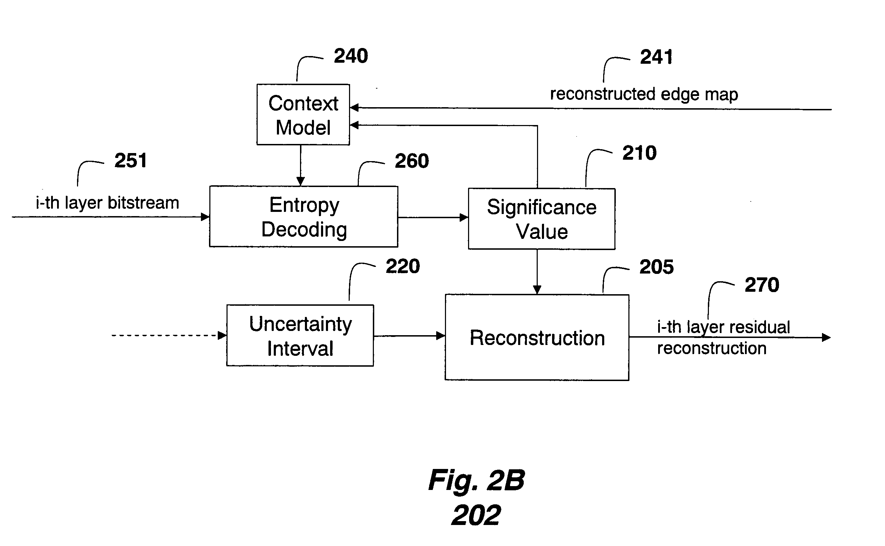

Fig. 2B is block diagram of an enhancement layer bitstream decoder according to embodiments of the invention.
[Fig. 3A]

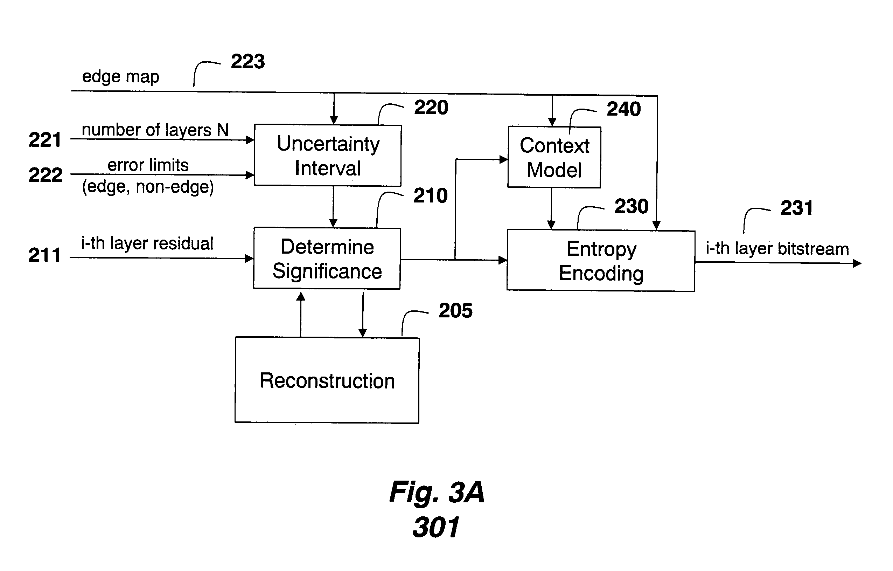

Fig. 3A is a block diagram of an enhancement layer bitstream encoder according to embodiments of the invention.
[Fig. 3B]

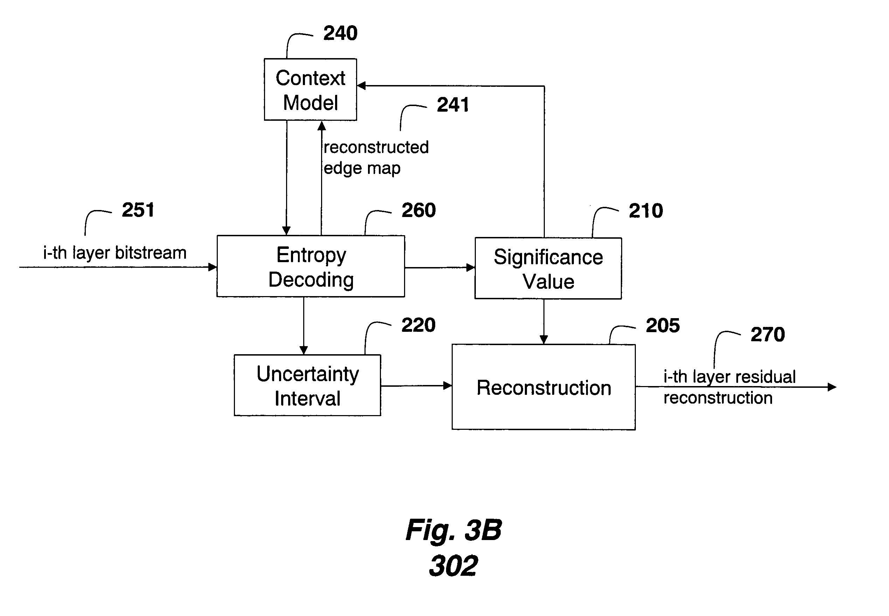

Fig. 3B is a block diagram of an enhancement layer bitstream decoder according to embodiments of the invention.
[Fig. 4A]

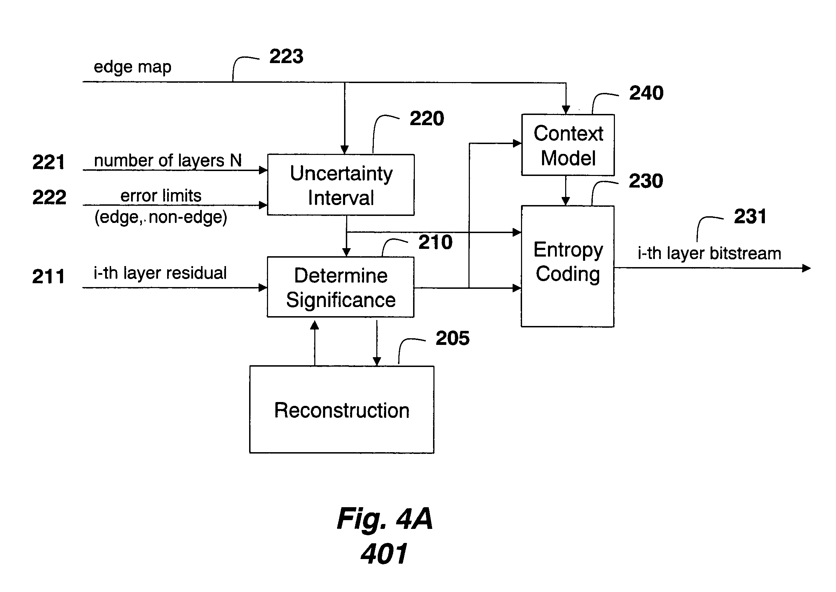

Fig. 4A is a block diagram of an enhancement layer bitstream encoder according to embodiments of the invention.
[Fig. 4B]

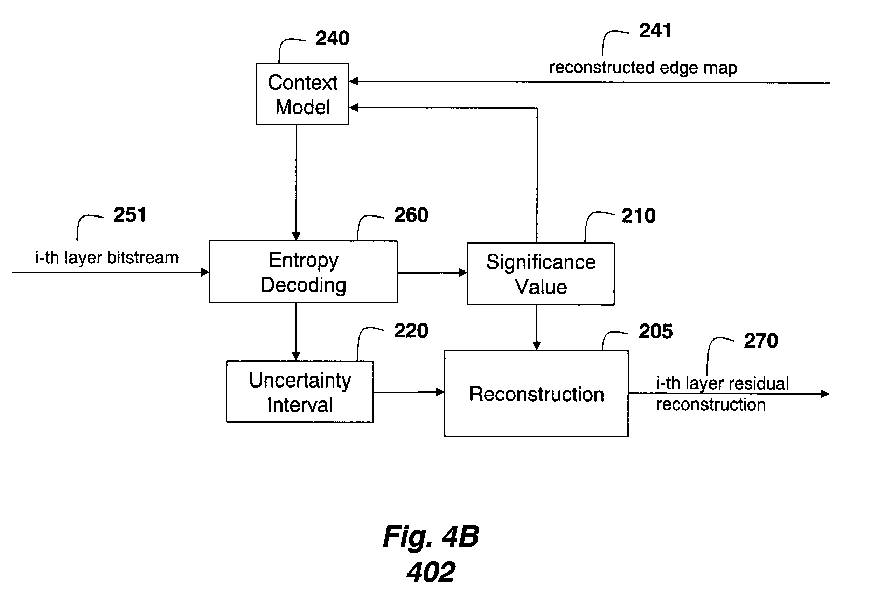

Fig. 4B is block diagram of an enhancement layer bitstream decoder according to embodiments of the invention.
[Fig. 5A]

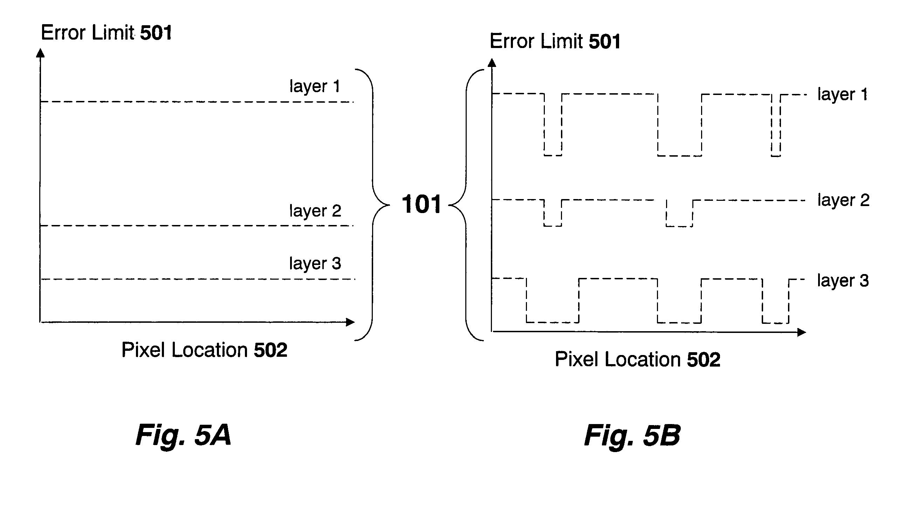

Figs 5A is a graph of non-adaptive setting of an error limit according to embodiments of the invention.
[Fig. 5B]
Figs 5B is a graph of adaptive setting of an error limit according to embodiments of the invention.

[Description of Embodiments]

Virtual view synthesis

Our virtual image synthesis uses camera parameters, and depth information in a scene to determine texture values for pixels in images synthesized from pixels in images from adjacent views (adjacent images).
Typically, two adjacent images are used to synthesize a virtual image for an arbitrary viewpoint between the adjacent images.
Every pixel in the two adjacent images is projected to a corresponding pixel in a plane of the virtual image. We use a pinhole camera model to project the pixel at location $(x, y)$ in the adjacent image c into world coordinates $[u, v, w]$ using

$$[u, v, w]^T = R_c \cdot A_c{}^{-1} \cdot [x, y, 1]^T \cdot d[c, x, y] + T_c, \qquad (1)$$

where d is the depth with respect to an optical center of the camera at the image $c$, and $A, R$ and $T$ are the camera parameters, and the superscripted $T$ is a transpose operator.
We map the world coordinates to target coordinates [x', y', z'] of the virtual image, according to:

$$X_v = [x', y', z']^T = A_v \cdot R_v{}^{-1} \cdot [u, v, w]^T - T_v. \qquad (2)$$

After normalizing by z', a pixel in the virtual image is obtained as $[x'/z', y'/z']$ corresponding to the pixel [x, y] in the adjacent image.
For texture mapping, we copy the depth and the corresponding texture $I[x, y]$ from the current adjacent image (c) into the corresponding location $[x'/z, y'/z]$ in virtual image depth and texture buffers. Depth and texture buffers are maintained for each adjacent image to generate the synthesized image.
Due to quantization of the projected location in the virtual buffers, the values for some pixels in the virtual image buffers are missing or undefined. To render the virtual image, we scan through each location in the two virtual image depth buffers and apply the following procedure.
If both depths are zero, then there is no texture information. This causes a hole in the synthesized image.
If one depth is non-zero, then use the texture value corresponding to the non-zero depth.
If both depths are non-zero, then we take a weighted sum of the corresponding texture values. To improve the quality of the final rendered image, filtering and in-painting can be applied. We prefer a 3 x 3 median filter to recover undefined areas in the synthesized image.

A direct transformation from a current camera to a virtual camera can be obtained by combining Equations (1) and (2):

$$X_v = [x', y', z']^T = M_1 \cdot d \cdot X_c + M_2,$$

$$(3)$$

where $M_1 = A_v \cdot R_v^{-1} \cdot R_c \cdot A_c^{-1}$, and $M_2 = A_v \cdot R_v^{-1} \cdot \{T_c - T_v\}$.

Analysis of depth error for virtual view synthesis

If there is a depth-coding error $\Delta d$, then the corresponding error in the location in the virtual camera $\Delta X_v$ is

$$\Delta X_v = M_1 \cdot X_c \cdot \Delta d.$$

$$(4)$$

Both $X_v$ and $X_v \Delta X_v$ are normalized to determine corresponding coordinates of the virtual camera. After the normalization, the texture-mapping error is

$$E_{map} = [\frac{x'}{z'}, \frac{y'}{z'}] - [\frac{x' + \Delta X_v(1)}{z' + \Delta X_v(3)}, \frac{y' + \Delta X_v(2)}{z' + \Delta X_v(3)}].$$

$$(5)$$

Using conventional coding schemes, larger depth coding errors can occur along object boundaries. The texture-mapping errors are also larger around the same boundaries.

Equation (5) indicates that the texture-mapping error depends on the depth coding error and other parameters, such as camera configurations and the coordinate of the point to be mapped.

If the camera parameters and depth information are sufficiently accurate, then a strict control on the depth is beneficial because the depth represents the geometrical distance in the scene. This is especially true near depth edges, which typically determine the boundary of an object.

In a multi-view video, a depth image is estimated for each view. A pixel in the depth image represents a distance to a 3D point in the scene. The distance must be accurate because a quality of virtual image synthesis is highly dependent on the depth. Therefore, it is crucial to balance the quality of the depth image and an associated bandwidth requirement.

Computer System and Method Overview

Therefore, the embodiments of the invention provide a multi-layered coding scheme for depth images and videos. The method guarantees that the maximum error for each reconstructed pixel is limited. The maximum error varies with each coding layer allowing a successive refinement of pixel values in the image. Within each coding layer, the error limit can also be adapted to account for local image characteristics such as edges that correspond to depth discontinuities.

System Overview

Figs 1A and 1B show a multi-layered encoder and decoder, respectively. The steps of the encoder and decoder can be performed in a processor 100 as known in the art.

For encoding, an input depth image (or video) I 101 is encoded as a base layer bitstream $L_0$ 102, and a set of one or more enhancement layer bitstreams $L_2$-$L_n$ 103. The enhancement layer bitstreams are arranged in a low to high order. The number of enhancement layer bitstreams depends on a bandwidth requirement for transmitting the depth image bit stream. For example, a low bandwidth can only support a small number of enhancement layer bitstreams. As the bandwidth increases, so can the number of enhancement layer bitstreams.

The encoding can be a lossy encoder 110 for the base layer $L_0$. For images, this could be a conventional encoding scheme, such as JPEG or JPEG 2000, which exploit spatial redundancy. For videos, the lossy encoder can be any conventional video encoding scheme such as MPEG-2 or H.264/AVC, which employs motion-compensated prediction to exploit temporal redundancy.

Then, a difference between the input and the base layer reconstructed image is obtained and provided as input to the first-level L-∞ layer bitstream encoder to produce a first layer bitstream. Then, a difference between the input and the first layer reconstructed image, i.e., the sum of the base layer reconstructed image and the first-layer residual reconstruction, is obtained and provided as input to the second-level L-∞ layer bitstream encoder 111 to produce a second layer bitstream. This process continues for N layers until the N-th layer bitstream is produced.

The multi-layer decoding process inverts the encoding operation. As shown in Fig. 1B, the base layer bitstream decoder 120 reconstructs a base layer image $\hat{I}_0$ 125 from the base layer bitstream 102. The first enhancement layer bitstream $L_1$ is decoded by the first-layer L-∞ decoder 121 to reconstruct the first layer residual, which is then added 130 to the reconstructed base layer image to yield the first layer reconstructed image $\hat{I}_1$. The second layer bitstream is decoded by the second-layer L-∞ decoder to produce the second layer residual reconstruction, which is then added 130 to the first layer reconstructed image to yield the second layer reconstructed image $\hat{I}_2$. This process continues for each enhancement layer bitstream 126 until the N-th layer reconstructed image is produced.

The number of layers in the set of enhancement layer bitstreams is usually fixed for a given video or application, i.e., not varying over time. However, it can vary with the available bandwidth as described above. A larger number of layer bitstreams provide a greater flexibility in scaling the rate for coding the depth, while ensuring a minimum level of quality for pixels in the depth image. Fewer layers are desirable to minimize overhead that is typical of most scalable coding schemes. Our studies indicate that 2-3 layers are suitable for depth image coding.

This invention describes several embodiments of the method, which vary in the way that enhancement layer bitstream encoding and decoding is performed.

Enhancement Layer bitstream with Inferred Side Information

Embodiments of an enhancement layer bitstream encoder 210 and decoder 202 are shown in Fig. 2A and 2B, respectively. The encoder performs the steps of the encoding and decoding methods.

For the reconstruction 205, the encoder determines 210 a significance value for each pixel in the i-th layer residual 211, which is the difference between the input image and the (i-1)-th reconstructed image, based on an uncertainty interval. The uncertainty interval defines an upper and lower bound for the current pixel value in order to limit errors.

A residual value is *significant* if it falls *outside the uncertainty interval.* The uncertainty interval 220 indicates a maximum allowable error for the pixel to be decoded, which can vary for the different layers 221, as specified by a layer identifier. The error limits 222 can also vary for different parts of the image. For example, edge pixels can have a lower error limit than non-edge pixels.

An edge map 223 is used to determine the uncertainty interval for each pixel of the image in the current layer. In this particular embodiment of the invention, the edge map is inferred only from reconstructed data available at the decoder in the form of a context model. In this way, no additional side information is needed by the decoder to determine the uncertainty interval. The reconstructed data that can be used includes the (i-1)-th layer reconstructed image and i-th layer residual.

In order to guarantee every pixel in the reconstruction is within the uncertainty interval, a new reconstruction pixel value within the uncertainty interval is assigned to the significant pixel. In "A Wavelet-Based Two-Stage Near-Lossless Coder with L-inf-Error Scalability," SPIE Conference on Visual Communications and Image Processing, 2006, Yea and Pearlman describe means for assigning the new reconstruction pixel value for a significant pixel. An alternative reconstruction process that is capable of more efficient coding is described below.

The process of assigning a new reconstruction value requires the coding of a sign bit in addition to the significance bit. Depending on the sign bit, a certain value is added or subtracted from the current pixel value. Hence, for a significant pixel, both the significance (value = 1) and the sign bits are entropy encoded 230.

For a non-significant pixel, there is no need to assign a new reconstruction value as the value already lies within the uncertainty interval. Therefore, only the significance bit (value = 0) needs to be entropy encoded for a non-significant pixel.

In order to efficiently compress the significance and the sign bits, the context model 240 is maintained by entropy encoding to produce an i-th layer bitstream. The use of context model converts the entropy encoding process to a conditional entropy coding process, which reduces the output coding rates by utilizing statistics of the data being coded.

In this embodiment, the maintaining of the context model is based on the statistics of significance bits in a given coding layer. In a preferred embodiment, the statistics of causal neighbors of a current pixel, i.e., data associated with neighboring pixels that have already been encoded or decoded, is considered. The context model also considers whether the current pixel is an edge pixel or non-edge pixel.

As shown in Fig. 2B for the reconstruction 205, the decoder 202 performs the inverse operation. The i-th layer bitstream 251 is entropy decoded 260, based on the context model, to determine 210 the significance value. Based on the uncertainty interval 220 and the significance value, the reconstruction 205 is performed, and the i-th layer residual reconstruction is output 270. The context model 240 is updated and maintained based on significance values obtained at the decoder, and edge map 241. The edge map in this embodiment of the invention is inferred from information available at the decoder.

Enhancement Layer bitstream with Explicit Side Information

Another embodiment of the enhancement layer bitstream encoder 301 and decoder 302 is shown in Fig. 3A and 3B, respectively. In this embodiment of the invention, the edge map is obtained from the original input image and coded as side information. An explicit edge map has the benefit of providing more accurate edge information. This requires additional bits to encode.

Another embodiment of the enhancement layer bitstream encoder 401 and decoder 402 is shown in Fig. 4A and 4B, respectively. In this embodiment of the invention, changes in the uncertainty interval are explicitly signaled. Explicit signaling of the uncertainty interval enables adaptive selection of uncertainty intervals according to a criterion, e.g., smaller uncertainty interval for edge pixels.

As shown in Fig. 5A, a non-adaptive setting of an error limit 501 for each layer is determined. In this case, the error limit is equal for all pixel positions 502, and independent of local image characteristics.

In Fig. 5B, an adaptive setting of error limit is determined according to pixel position. Lower error limits at each layer are chosen for edge pixels. The difference between error limits for the edge and non-edge pixels can vary in each enhancement layer bitstream. Also, the locations can vary from one layer to another.

Coding Procedure

In the following, methods for determining significance and performing reconstruction are described.

The input image to the i-th layer bitstream encoder is img(i, j) and, and the output reconstructed from the i-th layer bitstream decoder at (i, j) is rec(i, j).

A difference image is

$$\text{diff(i, j)} = \text{img(i, j)} - \text{rec(i, j).}$$

The reconstruction rec(i,j) is initially set to zero for every pixel (i, j).

A region of $2^{Lv}$ by $2^{Lv}$ pixels in img(,) is QT(i, j, Lv), with the upper-left corner coordinate at ($i*2^{Lv}$, $j*2^{Lv}$). We call this a quadtree at (i, j) at level Lv. Assume the input image to the i-th layer bitstream encoder is partitioned into a succession of non-overlapping quadtrees at level Lv following the raster-scan order, i.e., left-to-right and top-to-bottom.

A List of Insignificant Sets (LIS) initially contains every QT(i,j,Lv) as its element. The quadtree is said to be significant against the uncertainty level $\delta(n)$ when the following is true:

$$\max_{(x,y)\in QT(i,j,Lv)} \left|\text{diff}(x, y)\right| > \delta(n),$$

where (x, y) refers to a pixel in QT(i, j, Lv), and max is a function that returns a maximum value. A maximum uncertainty for the n-th layer bitstream encoder is $\delta(n)$.

The n-th layer bitstream encoder is performed in two phases, a first Significance-Phase and a second Refinement-Phase.

Significance-Phase

The Significance-Phase operates as follows:

For each QT(i,j,Lv) in LIS, repeat the steps (1) through (3).
Output the significance test bit (sig) given by

$$sig = \begin{cases} 1, \text{if } QT(i, j, Lv) \text{ is significant against } \delta(n) \\ 0, \text{otherwise} \end{cases}$$

(If sig = 0, goto (1) for next (i, j).

Otherwise, follow the step (3).

Set level=Lv-1 and run EncodeLIS(i, j,level), where EncodeLIS(i,j,level) is defined as follows:

EncodeLIS(i,j,level)

If level>0, for each of the four sub-quadtrees

QT(i, j, level), QT(i+1, j,level),QT(i, j+1 ,level), and QT(i+1, j+1, level), follow steps 2 and 3.

Otherwise, go to step 4.

1. Output significance bit (sig) against the uncertainty level $\delta(n)$.
2. If sig = 0, return. Otherwise run EncodeLIS(, , level-1).
3. Put (i,j) into a List of Significant Pixels (LSP(n)) and output:

$$sign = \begin{cases} 0, \text{if } diff(i, j) > 0 \\ 1, \text{otherwise} \end{cases}.$$

4. Update the reconstruction rec(i,j):

$$rec(i,j) \leftarrow \begin{cases} rec(i,j) + \delta(n) + \lfloor (\delta(n-1) - \delta(n) + 1)/2 \rfloor, \text{if } sign = 1 \\ rec(i,j) - \delta(n) - \lfloor (\delta(n-1) - \delta(n) + 1)/2 \rfloor, \text{otherwise} \end{cases}$$

5. Update diff(i,j):

$$diff(i, j) = img(i, j) - rec(i, j)$$

Refinement-Phase

The Refinement-Phase refines the pixels in LSP(k)'s (k=1,2,...,n) until the maximum uncertainty becomes less than or equal to the uncertainty level $\delta(n)$.
The Refinement-Phase operates as follows:

(1) For each k (k=1,2,...,n), follow the steps below:

Find the maximum uncertainty interval (Gap) of a pixel in LSP(k).

$$\text{Gap} = \min\left\{\left\lfloor (\delta(k-1) - \delta(k))/2 \right\rfloor, \delta(n-1)\right\}.$$

If Gap> $\delta(n)$, follow steps (3) through (8).

Otherwise, go to (1), with $k \leftarrow k + 1$.

For every pixel (i,j) in LSP(k), output the significance bit (sig) as:

$$\text{sig} = \begin{cases} 1, \text{if } |\text{diff(i, j)}| = \text{Gap} \\ 0, \text{otherwise} \end{cases}$$

If sig = 0, go to (8).

Otherwise, follow steps (4) through (8).
Output the sign:

$$\text{sign} = \begin{cases} 0, \text{if diff(i, j)} > 0 \\ 1, \text{otherwise} \end{cases}$$

1. Update the reconstruction rec(i, j):

$$\text{rec(i, j)} \Leftarrow \begin{cases} \text{rec(i, j)} + \text{Gap, if sign} = 0 \\ \text{rec(i, j)} - \text{Gap, otherwise} \end{cases}.$$

2. Update diff(i,j):

$$\text{diff (i, j)} = \text{img(i, j)} - \text{rec(i, j)}$$

3. Remove (i, j) from LSP(k)
4. Gap $\leftarrow$ Gap -1. Go to (2)

Multi-resolution Depth Coding

The input depth image I 101 in Fig. 1A can be filtered before encoding utilizing filtering techniques, such as the one described in the related Application. Filtering can remove erroneous values in a depth image, and make it easier to compress. The benefit of such an embodiment is that a smaller uncertainty level ($\delta(n)$) can be used for each enhancement layer bitstream without increasing the coding rate while retaining most of the essential information in the input depth image.
The input depth image I 101 in Fig. 1A can also be sub-sampled before encoding and the original resolution of the depth image can be recovered by up-sampling the reconstructed images in Fig. 1B. The down/up-sampling processes as described in the related Application can be used in such an embodiment. The benefit of such an embodiment is that a smaller uncertainty level ($\delta(n)$) can be used for each enhancement layer bitstream without increasing the coding rate while retaining most of the essential information in the original depth image.

Effect of the Invention

The embodiments of the invention provide a multi-layered coding method for depth images to complement edge-aware techniques, similar to those based on piecewise-linear functions (platelets). The method guarantees a near-lossless bound on the depths near edges by adding extra enhancement layer bitstreams to improve a visual quality of synthesized images. The method can incorporate in any lossy coder for the base layer bitstream and can be extended to videos. This is a notable advantage over platelet-like techniques which are not applicable to videos.

**Claims**

1. A processor based method for reconstructing a depth image (101) encoded as a depth bitstream including a base layer bitstream and a set of enhancement layer bitstreams (103), wherein the set of enhancement layer bitstreams are arranged in a low to high order, and wherein a value of a pixel in the depth image represents a distance to a three-dimensional (3D) point in a scene, comprising the steps of:

   decoding the base layer bitstream (102) to produce pixels of a reconstructed base layer image corresponding to the depth image;
   decoding, in the low to high order, each enhancement layer bitstream (103), wherein the decoding of each enhancement layer bitstream produces a reconstructed residual image, further comprising,
   maintaining a context model (240) using an edge map corresponding to depth discontinuities of the depth image by utilizing statistics of the data of the enhancement layer bitstream being coded;
   entropy decoding (260) each enhancement layer bitstream using the context model (240) to determine a significance value for each pixel (210) and a sign bit for each significant pixel, wherein if the significance value of said each pixel is set to 1 then a residual value of said each pixel of the reconstructed residual image falls outside an uncertainty interval, which indicates a maximum allowable error for a pixel to be decoded, and if the significance value of said each pixel is set to 0 then the residual value of said each pixel is within the uncertainty interval; and
   reconstructing (205) a pixel value of the reconstructed residual image according to the significance value, sign bit and the uncertainty interval;
   adding (130) the reconstructed residual images to the reconstructed base layer image to produce a reconstructed depth image, wherein the reconstructed depth image has a maximum error relative to the depth image corresponding to the uncertainty interval associated with the highest enhancement layer; and
   using the reconstructed depth image for virtual view synthesis.

2. The method of claim 1, wherein the pixel value is associated with an error limit indicated by the uncertainty interval.

3. The method of claim 2, wherein the error limit varies for each enhancement layer bitstream.

4. The method of claim 2, wherein the error limit varies according to local image characteristics.

5. The method of claim 4, wherein the local image characteristics include edges.

6. The method of claim 1, wherein a number of the enhancement layer bitstreams depends on a bandwidth for transmitting the depth bitstream.

7. The method of claim 1, wherein the context model is additionally maintained based on statistics of the significance values and the sign bits.

8. The method of claim 1, wherein the edge map is inferred during the decoding.

9. The method of claim 1, wherein the edge map is included in the depth bitstream by the encoding.

10. The method of claim 1, wherein the uncertainty interval is explicitly signaled in the depth bitstream.

11. The method of claim 1, further comprising steps for generating said depth bitstream as follows:

   encoding, in a lossy manner, the depth image to produce the base layer bitstream;

determining, for each enhancement layer bitstream, a residual image as a difference between the depth image and the reconstructed depth image of a prior layer, where the prior layer is the base layer bitstream for the first enhancement layer bitstream, and otherwise a prior enhancement layer bitstream; and

encoding, for each enhancement layer bit stream, the residual image to produce the set of enhancement layer bitstreams.

12. The method of claim 1, further comprising:

up-sampling the reconstructed depth image.

13. A decoder for reconstructing a depth image encoded as a depth bitstream including a base layer bitstream and a set of enhancement layer bitstreams, wherein the set of enhancement layer bitstreams are arranged in a low to high order, and wherein a value of a pixel in the depth image represents a distance to a three-dimensional (3D) point in a scene, comprising:

a lossy base layer decoder configured to produce pixels of a reconstructed base layer image corresponding to the depth image;

a set of enhancement layer decoders, wherein there is one enhancement layer decoder for each enhancement layer bitstream, and wherein the set of enhancement layer bitstreams are decoded in the low to high order, and wherein the decoding of each enhancement layer bitstream produces a reconstructed residual image; and wherein each enhancement layer decoder further comprises:

means for maintaining a context model using an edge map corresponding to depth discontinuities of the depth image by utilizing statistics of the data of the enhancement layer bitstream being coded;

means for entropy decoding each enhancement layer bitstream using the context model to determine a significance value for each pixel and a sign bit for each significant pixel, wherein if the significance value of said each pixel is set to 1 then a residual value of said each pixel of the reconstructed residual image falls outside an uncertainty interval, which indicates a maximum allowable error for a pixel to be decoded, and if the significance value of said each pixel is set to 0 then the residual value of said each pixel is within the uncertainty interval; and

means for reconstructing a pixel value of the reconstructed residual image according to the significance value, sign bit and the uncertainty interval;

means for adding the reconstructed residual images to the reconstructed base layer image to produce a reconstructed depth image, wherein the reconstructed depth image has a maximum error relative to the depth image corresponding to the uncertainty interval associated with the highest enhancement layer; and

means for using the reconstructed depth image for virtual view synthesis.

**Patentansprüche**

1. Ein prozessorbasiertes Verfahren zum Rekonstruieren eines Tiefenbildes (101), das als ein Tiefen-Bitstrom beinhaltend einen Basisschicht-Bitstrom und eine Menge von Verbesserungsschicht-Bitströmen (103) kodiert ist, wobei die Menge von Verbesserungsschicht-Bitströmen angeordnet ist in einer Folge niedrig zu hoch und wobei ein Wert eines Pixels in dem Tiefenbild einen Abstand zu einem dreidimensionalen (3D) Punkt in einer Szene repräsentiert, mit den folgenden Schritten:

Dekodieren des Basisschicht-Bitstroms (102) zum Erzeugen von Pixeln eines rekonstruierten Basisschichtbildes entsprechend des Tiefenbildes;

Dekodieren, in der Folge niedrig zu hoch, jedes Verbesserungsschicht-Bitstroms (103), wobei das Dekodieren von jedem Verbesserungsschicht-Bitstrom ein rekonstruiertes Restbild erzeugt, darüber hinaus umfassend

Halten eines Kontextmodells (240) unter Verwendung einer Kantenkarte entsprechend Tiefendiskontinuitäten des Tiefenbildes durch Verwenden von Statistiken von den Daten des kodierten Verbesserungsschicht-Bitstroms;

Entropie-Dekodieren (260) jedes Verbesserungsschicht-Bitstroms unter Verwendung des Kontextmodells (240) zum Bestimmen eines Signifikanz-Wertes für jedes Pixel (210) und eines Vorzeichen-Bits für jedes signifikante Pixel, wobei, wenn der Signifikanz-Wert von besagtem jedem Pixel auf 1 gesetzt ist, dann ein Restwert von besagtem jedem Pixel des rekonstruierten Restbildes außerhalb eines Unsicherheitsintervalls, das einen maximal erlaubten Fehler für ein zu dekodierendes Pixel anzeigt, fällt, und, wenn der Signifikanz-Wert von besagtem jedem Pixel auf 0 gesetzt ist, dann der Restwert von besagtem jedem Pixel innerhalb des Unsicherheitsintervalls ist; und

Rekonstruieren (205) eines Pixelwerts des rekonstruierten Restbildes gemäß des Signifikanz-Werts, Vorzeichenbits und des Unsicherheits-Intervalls;

Addieren (130) der rekonstruierten Restbilder zu dem rekonstruierten Basisschichtbild zum Erzeugen eines rekonstruierten Tiefenbildes, wobei das rekonstruierte Tiefenbild einen maximalen Fehler relativ zu dem Tiefenbild aufweist entsprechend des mit der höchsten Verbesserungsschicht verbundenen Unsicherheitsintervalls; und

Verwenden des rekonstruierten Tiefenbildes für eine virtuelle Sichtsynthese.

2. Das Verfahren gemäß Anspruch 1, wobei der Pixelwert mit einer Fehlergrenze verbunden ist, die durch das Unsicherheitsintervall angezeigt wird.

3. Das Verfahren gemäß Anspruch 2, wobei die Fehlergrenze für jeden Verbesserungsschicht-Bitstrom variiert.

4. Das Verfahren gemäß Anspruch 2, wobei die Fehlergrenze gemäß lokaler Bildcharakteristika variiert.

5. Das Verfahren nach Anspruch 4, wobei die lokalen Bildcharakteristika Kanten beinhalten.

6. Das Verfahren gemäß Anspruch 1, wobei eine Anzahl der Verbesserungsschicht-Bitströme von einer Bandbreite zum Übertragen des Tiefen-Bitstroms abhängt.

7. Das Verfahren gemäß Anspruch 1, wobei das Kontextmodell darüber hinaus gehalten wird basierend auf Statistiken der Signifikanz-Werte und der Vorzeichen-Bits.

8. Das Verfahren gemäß Anspruch 1, wobei die Kantenkarte während des Dekodierens abgeleitet wird.

9. Das Verfahren gemäß Anspruch 1, wobei die Kantenkarte in dem Tiefen-Bitstrom inkludiert wird durch das Kodieren.

10. Das Verfahren gemäß Anspruch 1, wobei das Unsicherheitsintervall explizit in dem Tiefen-Bitstrom signalisiert wird.

11. Das Verfahren gemäß Anspruch 1, darüber hinaus umfassend Schritte zum Erzeugen besagten Tiefen-Bitstroms wie folgt:

Kodieren, in einer verlustbehafteten Art und Weise, des Tiefenbildes zum Erzeugen des Basisschicht-Bitstroms; Bestimmen, für jeden Verbesserungsschicht-Bitstrom, eines Restbildes als eine Differenz zwischen dem Tiefenbild und dem rekonstruierten Tiefenbild einer vorherigen Schicht, wobei die vorherige Schicht der Basisschicht-Bitstrom für den ersten Verbesserungsschicht-Bitstrom ist und andernfalls ein vorheriger Verbesserungsschicht-Bitstrom ist; und

Kodieren, für jeden Verbesserungsschicht-Bitstrom, des Restbildes zum Erzeugen der Menge von Verbesserungsschicht-Bitströmen.

12. Das Verfahren gemäß Anspruch 1, darüber hinaus umfassend: Ein Up-Sampling des rekonstruierten Tiefenbildes.

13. Ein Dekodierer zum Rekonstruieren eines Tiefenbildes, das als ein Tiefen-Bitstrom beinhaltend einen Basisschicht-Bitstrom und eine Menge von Verbesserungsschicht-Bitströmen kodiert ist, wobei die Menge von Verbesserungsschicht-Bitströmen in einer Folge niedrig zu hoch angeordnet ist und wobei ein Wert eines Pixels in dem Tiefenbild einen Abstand zu einem dreidimensionalen (3D) Punkt in einer Szene repräsentiert, umfassend:

Einen verlustbehafteten Basisschicht-Dekodierer, der ausgebildet ist zum Erzeugen von Pixeln eines rekonstruierten Basisschichtbildes entsprechend des Tiefenbildes; eine Menge von Verbesserungsschicht-Dekodierern, wobei es einen Verbesserungsschicht-Dekodierer für jeden Verbesserungsschicht-Bitstrom gibt und wobei die Menge von Verbesserungsschicht-Bitströmen in der Folge niedrig zu hoch dekodiert wird und wobei das Dekodieren von jedem Verbesserungsschicht-Bitstrom ein rekonstruiertes Restbild erzeugt; und wobei jeder Verbesserungsschicht-Dekodierer darüber hinaus umfasst:

Ein Mittel zum Halten eines Kontext-Modells unter Verwendung einer Kantenkarte entsprechend Tiefendiskontinuitäten des Tiefenbildes unter Verwendung von Statistiken der Daten des kodierten Verbesserungsschicht-Bitstroms;

ein Mittel zum Entropie-Dekodieren jedes Verbesserungsschicht-Bitstroms unter Verwendung des Kontextmodells zum Bestimmen eines Signifikanz-Wertes für jedes Pixel und eines Vorzeichen-Bits für jedes signifikante Pixel, wobei, wenn der Signifikanz-Wert von besagtem jedem Pixel auf 1 gesetzt ist, dann ein Restwert von besagtem jedem Pixel des rekonstruierten Restbildes außerhalb eines Unsicherheitsintervalls, das einen maximal erlaubten Fehler für ein zu dekodierendes Pixel anzeigt, fällt, und, wenn der Signifikanz-Wert von besagtem jedem Pixel auf 0 gesetzt ist, dann der Restwert von besagtem jedem Pixel innerhalb des Unsicherheitsintervalls ist; und

ein Mittel zum Rekonstruieren eines Pixelwertes des rekonstruierten Restbildes gemäß des Signifikanz-Werts, Vorzeichen-Bits und des Unsicherheitsintervalls;

ein Mittel zum Addieren der rekonstruierten Restbilder zu dem rekonstruierten Basisschichtbild zum Erzeugen eines rekonstruierten Tiefenbildes, wobei das rekonstruierte Tiefenbild einen maximalen Fehler relativ zu dem Tiefenbild entsprechend des mit der höchsten Verbesserungsschicht verbundenen Unsicherheitsintervalls aufweist; und

ein Mittel zum Verwenden des rekonstruierten Tiefenbildes für eine virtuelle Sichtsynthese.

## Revendications

1.  Procédé basé sur un processeur destiné à reconstruire une image de profondeur (101) codée sous la forme d'un train de bits de profondeur qui comprend un train de bits de couche de base et un ensemble de trains de bits de couche d'amélioration (103), dans lequel l'ensemble des trains de bits de couche d'amélioration sont agencés dans un ordre de faible à élevé, et dans lequel une valeur d'un pixel dans l'image de profondeur représente une distance jusqu'à un point tridimensionnel (3D) dans une scène, comprenant les étapes consistant à :

    décoder le train de bits de couche de base (102) de façon à produire des pixels d'une image de couche de base reconstruite correspondant à l'image de profondeur ;
    décoder, dans l'ordre de faible à élevé, chaque train de bits de couche d'amélioration (103), dans lequel le décodage de chaque train de bits de couche d'amélioration produit une image résiduelle reconstruite, comprenant en outre les étapes consistant à :

    mettre à jour un modèle de contexte (240) en utilisant une carte de bords qui correspond à des discontinuités de profondeur de l'image de profondeur en utilisant des statistiques des données du train de bits de la couche d'amélioration codé ;
    décoder de manière entropique (260) chaque train de bits de couche d'amélioration en utilisant le modèle de contexte (240) de façon à déterminer une valeur d'importance de chaque pixel (210) et un bit de signe de chaque pixel important, dans lequel, si la valeur d'importance de chaque dit pixel est égale à 1, alors la valeur résiduelle de chaque dit pixel de l'image résiduelle reconstruite tombe à l'extérieur d'un intervalle d'incertitude, qui indique une erreur permise maximale pour qu'un pixel soit décodé, et si la valeur d'importance de chaque dit pixel est égale à 0, alors la valeur résiduelle de chaque dit pixel se situe à l'intérieur de l'intervalle d'incertitude ; et
    reconstruire (205) une valeur de pixel de l'image résiduelle reconstruite selon la valeur d'importance, le bit de signe et l'intervalle d'incertitude ;
    ajouter (130) les images résiduelles reconstruites à l'image de couche de base reconstruite de façon à produire une image de profondeur reconstruite, dans lequel l'image de profondeur reconstruite présente une erreur maximum par rapport à l'image de profondeur correspondant à l'intervalle d'incertitude associée à la couche d'amélioration la plus élevée ; et
    utiliser l'image de profondeur reconstruite pour une synthèse de vue virtuelle.

2.  Procédé selon la revendication 1, dans lequel la valeur de pixel est associée à une limite d'erreur indiquée par l'intervalle d'incertitude.

3.  Procédé selon la revendication 2, dans lequel la limite d'erreur varie pour chaque train de bits de couche d'amélioration.

**4.** Procédé selon la revendication 2, dans lequel la limite d'erreur varie selon des caractéristiques d'image locale.

**5.** Procédé selon la revendication 4, dans lequel les caractéristiques d'image locale comprennent des bords.

**6.** Procédé selon la revendication 1, dans lequel le nombre de trains de bits de couche d'amélioration dépend d'une largeur de bande destinée à transmettre le train de bits de profondeur.

**7.** Procédé selon la revendication 1, dans lequel le modèle de contexte est mis à jour de manière additionnelle sur la base de statistiques des valeurs d'importance et des bits de signe.

**8.** Procédé selon la revendication 1, dans lequel la carte de bords est inférée au cours du décodage.

**9.** Procédé selon la revendication 1, dans lequel la carte de bords est incluse dans le train de bits de profondeur par le codage.

**10.** Procédé selon la revendication 1, dans lequel l'intervalle d'incertitude est signalé de manière explicite dans le train de bits de profondeur.

**11.** Procédé selon la revendication 1, comprenant en outre des étapes destinées à générer ledit train de bits de profondeur de la façon suivante :

coder, d'une façon avec pertes, l'image de profondeur de façon à produire le train de bits de couche de base ; déterminer, pour chaque train de bits de couche d'amélioration, une image résiduelle comme étant la différence entre l'image de profondeur et l'image de profondeur reconstruite d'une couche antérieure, dans lequel la couche antérieure est le train de bits de couche de base du premier train de bits de couche d'amélioration, et sinon un train de bits de couche d'amélioration antérieure ; et coder, pour chaque train de bits de couche d'amélioration, l'image résiduelle de façon à produire l'ensemble de trains de bits de couche d'amélioration.

**12.** Procédé selon la revendication 1, comprenant en outre une étape consistant à :

suréchantillonner l'image de profondeur reconstruite.

**13.** Décodeur destiné à reconstruire une image de profondeur codée sous la forme d'un train de bits de profondeur qui comprend un train de bits de couche de base et un ensemble de trains de bits de couche d'amélioration, dans lequel l'ensemble de trains de bits de couche d'amélioration sont agencés dans un ordre de faible à élevé, et dans lequel une valeur d'un pixel dans l'image de profondeur représente une distance jusqu'à un point tridimensionnel (3D) dans une scène, comprenant :

un décodeur de couche de base avec pertes configuré de façon à produire des pixels d'une image de couche de base reconstruite correspondant à l'image de profondeur ; un ensemble de décodeurs de couche d'amélioration, dans lequel il y a un décodeur de couche d'amélioration pour chaque train de bits de couche d'amélioration, et dans lequel l'ensemble de trains de bits de couche d'amélioration sont décodés dans l'ordre de faible à élevé, et dans lequel le décodage de chaque train de bits de couche d'amélioration produit une image résiduelle reconstruite ; et dans lequel chaque décodeur de couche d'amélioration comprend en outre :

des moyens destinés à mettre à jour un modèle de contexte en utilisant une carte de bords qui correspond à des discontinuités de profondeur de l'image de profondeur en utilisant des statistiques des données du train de bits de la couche d'amélioration codé ; des moyens destinés à décoder de manière entropique chaque train de bits de couche d'amélioration en utilisant le modèle de contexte de façon à déterminer une valeur d'importance de chaque pixel et un bit de signe de chaque pixel important, dans lequel, si la valeur d'importance de chaque dit pixel est égale à 1, alors la valeur résiduelle de chaque dit pixel de l'image résiduelle reconstruite tombe à l'extérieur d'un intervalle d'incertitude, qui indique une erreur permise maximale pour qu'un pixel soit décodé, et si la valeur d'importance de chaque dit pixel est égale à 0, alors la valeur résiduelle de chaque dit pixel se situe à l'intérieur de l'intervalle d'incertitude ; et des moyens destinés à reconstruire une valeur de pixel de l'image résiduelle reconstruite selon la valeur d'importance, le bit de signe et l'intervalle d'incertitude ;
des moyens destinés à ajouter les images résiduelles reconstruites à l'image de couche de base reconstruite de façon à produire une image de profondeur reconstruite, dans lequel l'image de profondeur reconstruite présente une erreur maximum par rapport à l'image de profondeur correspondant à l'intervalle d'incertitude associée à la couche d'amélioration la plus élevée ; et
des moyens destinés à utiliser l'image de profondeur reconstruite pour une synthèse de vue virtuelle.

processor 100

101
I ( depth image)

Lossy Base-Layer Encoder — 110 — $L^0$ — 102

1st level $L_\infty$ Layer Encoder — $L^1$

2nd level $L_\infty$ Layer Encoder — $L^2$

$n^{th}$ level $L_\infty$ Layer Encoder — 111 — $L^n$

103

*Fig. 1A*

*Fig. 1B*

edge map — **223**

**221**

number of layers N → **Uncertainty Interval** ← **220**

error limits
(edge, non-edge) → **222**

**Context Model** — **240**

**211**

i-th layer residual → **Determine Significance** — **210**

**Entropy Encoding** — **230**

→ **231**

i-th layer bitstream

**Reconstruction** — **205**

*Fig. 2A*
*201*

**240**

**241**

Context
Model

reconstructed edge map

**251**

**260**

**210**

i-th layer bitstream

Entropy
Decoding

Significance
Value

**220**

**205**

**270**

Uncertainty
Interval

Reconstruction

i-th layer residual
reconstruction

*Fig. 2B*
*202*

edge map ⌐ **223**

**221** number of layers N

**222** error limits
(edge, non-edge)

**211** i-th layer residual

**220**
Uncertainty
Interval

**240**
Context
Model

**210**
Determine
Significance

**230**
Entropy
Encoding

**231**
i-th layer bitstream

**205**
Reconstruction

*Fig. 3A*
*301*

**240**

Context
Model

**241**

reconstructed
edge map

**251**

i-th layer bitstream

**260**

Entropy
Decoding

**210**

Significance
Value

**220**

Uncertainty
Interval

**205**

Reconstruction

**270**

i-th layer residual
reconstruction

*Fig. 3B*
*302*

**Fig. 4A**
**401**

**Fig. 4B**
**402**

Error Limit **501**

layer 1

layer 2

layer 3

**101**

Pixel Location **502**

*Fig. 5B*

Error Limit **501**

layer 1

layer 2

layer 3

Pixel Location **502**

*Fig. 5A*

# EP 2 428 045 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHIN D et al.** A region-of-interest (ROI) based wavelet compression scheme for medical images. *PROCEEDINGS OF THE INTERNATIONAL SOCIETY FOR OPTICAL ENGINEERING (SPIE), USA,* 23 February 1997, vol. 3031, 790-798
- **LIU Y et al.** Embedded image coding based on context classification and quadtree ordering in wavelet packet domain. *VISUAL COMMUNICATIONS AND IMAGE PROCESSING,* 07 December 2005
- The Effect of Depth Compression on Multiview Rendering Quality. **MERKLE P et al.** 3DTV CONFERENCE: THE TRUE VISION - CAPTURE, TRANSMISSION AND DISPLAY OF 3D VIDEO. IEEE, 28 May 2008, 245-248
- Multiview video hybrid coding system with texture-depth synthesis. **PEI-KUEI TSUNG et al.** MULTIMEDIA AND EXPO, 2008 IEEE INTERNATIONAL CONFERENCE. IEEE, 23 June 2008, 1581-1584
- **MERKLE et al.** The Effect of Depth Compression on Multiview Rendering Quality. *3DTV Conference: The True Vision - Capture, Transmission and Display of 3D Video,* vol. 28-30, 245-248
- **YEA ; PEARLMAN.** A Wavelet-Based Two-Stage Near-Lossless Coder with L-inf-Error Scalability. *SPIE Conference on Visual Communications and Image Processing,* 2006